# EUROPÄISCHE PATENTSCHRIFT

(11) **EP 2 209 598 B1**
(45) Veröffentlichungstag und Bekanntmachung des Hinweises auf die Patenterteilung: **27.02.2013**
(21) Anmeldenummer: 08841461.0
(22) Anmeldetag: 15.10.2008
(51) Int. Cl.: B29B 9/06, B29C 47/34

(54) **STRANGGIESSVORRICHTUNG ZUR ERZEUGUNG VON GRANULATKÖRNERN AUS KUNSTSTOFFMATERIAL UND VERFAHREN ZU DEREN BETRIEB**
CONTINUOUS CASTING DEVICE FOR PRODUCING PELLETS FROM PLASTIC MATERIAL AND METHOD FOR OPERATING THE SAME
DISPOSITIF DE COULÉE CONTINUE DESTINÉ À PRODUIRE DES CORPS GRANULAIRES EN MATIÈRE PLASTIQUE ET PROCÉDÉ POUR LE FAIRE FONCTIONNER

(30) Priorität: 23.10.2007 DE 102007050592
(43) Veröffentlichungstag der Anmeldung: 28.07.2010
(73) Patentinhaber: Automatik Plastics Machinery GmbH, 63762 Grossostheim (DE)
(72) Erfinder: FENCHEL, Sven, 64832 Babenhausen/Langstadt (DE); SCHEURICH, Jochen, 63843 Niedernberg (DE)
(74) Vertreter: Borchert, Uwe Rudolf
(86) Internationale Anmeldenummer: PCT/EP2008/008728
(87) Internationale Veröffentlichungsnummer: WO 2009/052979

(56) Entgegenhaltungen:
- EP-A- 0 411 536
- DE-A1- 10 139 324
- US-A- 4 528 157

## Beschreibung

Die Erfindung betrifft eine Vorrichtung zur Erzeugung von Granulatkörnern aus Kunststoffmaterial bzw. aus beliebigem zu granulierendem Material, mit einer Stranggießvorrichtung, aus welcher zumindest ein Strang des Kunststoffmaterials austritt, und einer Bandfördervorrichtung mit zumindest einem Förderband, auf welchem der Strang einer Granuliervorrichtung zugeführt ist, welche den Strang in die Granulatkörner zerteilt, gemäß dem Oberbegriff des Anspruchs 1. Die Erfindung betrifft auch ein Verfahren zum Betrieb einer solchen Vorrichtung.

Generell besteht bei Vorrichtungen zur Erzeugung von Granulatkörnern aus Kunststoffmaterial bzw. aus beliebigem zu granulierendem Material mit einer Stranggießvorrichtung das Problem, dass es im Betrieb, insbesondere während des Anfahrvorgangs, zu Abrissen der Stränge kommen kann. Somit sind herkömmlicher Weise äußerst aufwendig zu steuernde und einer aufwendigen Überwachung unterliegende Vorrichtungen und Verfahren gemäß dem Stand der Technik nötig, um einen Strangabriss zu vermeiden bzw. führzeitig zu erkennen und entsprechende Vorrichtungen gegebenenfalls anhalten zu können. Insbesondere beim Anfahrvorgang entsteht das zusätzliche Problem, dass die jeweiligen Stranganfänge nicht ganz gleichmäßig aus einer Stranggießvorrichtung austreten. Dies hängt zum Einen mit eventuellen noch vorhandenen Innhomogenitäten im Strangmaterial zusammen, aber auch zum Beispiel damit, dass sich noch kein Gleichgewichtstemperaturprofil einstellen konnte und auch noch kein Gleichgewicht zwischen Strangaustrittsgeschwindigkeit aus der Stranggießvorrichtung und Strangabzugsgeschwindigkeit von der Stranggießvorrichtung von Anfang an einstellbar ist. Gerade beim Anfahrvorgang kommt es daher besonders leicht zu Strangabrissen, unerwünschten Innhomogenitäten in den Strängen, unerwünschten Überlagerungen von Strängen und dergleichen.

Insbesondere wird aufgrund der oben beschriebenen Problemstellungen ein automatischer Betrieb, insbesondere ein automatisches Anfahren, solcher Vorrichtungen des Standes der Technik bislang erschwert bzw. ein automatischer Betrieb solcher Vorrichtungen gemäß dem Stand der Technik ist insbesondere beim Anfahrvorgang nicht möglich.

Das deutsche Gebrauchsmuster DE 8618393.1 beschreibt eine Vorrichtung zum Abkühlen und Transportieren von Strängen aus thermoplastischen Kunststoffen, die in einem Extruder oder dergleichen aufschmelzbar und schmelzflüssig aus Düsen eines an den Extruder angeschlossenen Düsenkopfes austretend auf ein Förderband ablegbar und von diesem auf eine Granuliervorrichtung zubewegbar sind, wobei eine Besprühung mit Kühlmittel auf der Bewegungsstrecke vorgesehen ist. Mit dieser dort beschriebenen Vorrichtung soll zum Beispiel durch eine Variabilität der Geschwindigkeit des dortigen Förderbands in Förderrichtung zur Granuliereinrichtung hin die Möglichkeit geschaffen werden, eine möglichst zuverlässige und nicht z.B. durch Überkreuzungen von Strängen beeinflusste Strangwegführung von dem Düsenkopf und Strangzuführung zu der Extrusionseinrichtung zu gewährleisten. Spezielle konstruktive und verfahrenstechnische Merkmale, welche insbesondere den Anfahrvorgang weiter verbessern könnten, sind aus diesem Gebrauchsmuster jedoch nicht bekannt.

Die deutsche Offenlegungsschrift DE 10139324 Al Offenbart eine Vorrichtung gemäß dem Oberbegriff des Anspruchs 1 und ein Verfahren gemäß dem Oberbegriff des Anspruchs 10 und beschreibt eine Vorrichtung zur Verwendung in einer Kunststoffgranulieranlage, die eine mit Kühlflüssigkeit bespülte Transporteinrichtung zum Abkühlen und Transportieren von schmelzflüssig zugeführten Kunststoffsträngen zu einem nachgeordneten Granulator sowie eine Leitvorrichtung umfasst, welche zwischen einer Betriebsposition und einer Anlaufposition so verlagerbar ist, dass sie in einer der beiden Positionen die Kunststoffstränge auffängt und in eine gewünschte Richtung leitet, wobei zusätzlich zu der mit Kühlflüssigkeit bespülten Vorrichtung zu dem Granulator, dem sogenannten "Produktionsgranulator", eine weitere mit Kühl Flüssigkeit bespülte Transporteinrichtung vorgesehen ist, welche die Kunststoffstränge in der Anlaufphase der dortigen Kunststoffstranggranulieranlage zu einem zweiten Granulator transportiert, dem sogenannten "Abfallgranulator". Die dortige Anlage benötigt somit sehr aufwendig zu steuernde, vielfach sogar doppelt erforderliche Transport-, Förder- und Leitvorrichtungen zur entsprechenden Führung von Kunststoffsträngen.

Es ist somit eine Aufgabe der vorliegenden Erfindung eine Vorrichtung und ein Verfahren zur Erzeugung von Granulatkörner aus Kunststoffmaterial bzw. aus zu granulierendem Material, mit einer Stranggießvorrichtung vorzusehen, welche(s) die Nachteile des Standes der Technik überwindet und insbesondere beim Betrieb und speziell beim Anfahrvorgang auf einfache und somit kostengünstige Weise einen zuverlässigen Betrieb, insbesondere beim Anfahren, ermöglicht, wobei speziell auch eine weitgehende Automatisierung möglich ist.

Die Aufgabe wird erfindungsgemäß gelöst durch eine Vorrichtung mit den Merkmalen gemäß Anspruch 1 sowie durch ein Verfahren mit den Merkmalen gemäß Anspruch 10.

Bevorzugte Ausführungsformen sind in den jeweiligen Unteransprüchen definiert.

Die erfindungsgemäße Vorrichtung dient zur Erzeugung von Granulatkörnern aus Kunststoffmaterial bzw. aus zu granulierendem Material mit einer Stranggießvorrichtung, aus welcher zumindest eine Strang des zu granulierenden Materials austritt, und einer Bandfördervorrichtung mit zumindest mit einem Förderband, auf welchem der Strang einer Granuliervorrichtung zuführbar ist, welche den Strang in die Granulatkörner zerteilt. Erfindungsgemäß weist die Bandfördervorrichtung einer umschaltbare Förderrichtung des Förderbandes auf mit einer Zuführförderrichtung zu der Granuliervorrichtung hin und mit einer Wegführförderrichtung von der Granuliervorrichrung weg.

Durch die erfindungsgemäße Gestaltung mit einer in ihrer Richtung umschaltbar zu betreibenden Bandfördervorrichtung kann die erfindungsgemäße Vorrichtung zur Erzeugung von Granulatkörnern auf relativ einfache und kostengünstige Weise einen zuverlässigen Betrieb, insbesondere beim Anfahren der Vorrichtung ermöglichen. Darüber hinaus kann auch eine weitestgehende Automatisierung des Betriebs, insbesondere auch beim Anfahren der Vorrichtung, dadurch erfindungsgemäß erreicht werden. Es können dabei die aufwendigen Vorrichtungen, Steuerungen und Überwachungen gemäß dem Stand der Technik erfindungsgemäß weitestgehend vermieden werden.

Die Erfindung kann so eine automatische und zuverlässige Granulierung von verschiedensten Materialien, insbesondere Kunststoffen, ermöglichen. Ein großer Vorteil kann dabei in der einfachen und dennoch automatischen Betriebsweise der Vorrichtung liegen. Die erfindungsgemäße Vorrichtung kann beispielsweise Anwendung finden bei hochgefüllten Kunststoffcompounds und zugspannungsempfindlichen Kunststoffen, sowie bei Recyclingprozessen, welche bei herkömmlichen Granulierverfahren zu häufigen Strangabrissen führen.

Unter dem Begriff Kunststoffmaterial ist erfindungsgemäß auch beispielsweise bevorzugt jegliches zu granulierende Material zu verstehen. Anwendungsfelder bzw. zugranulierende Materialien können sein: Thermoplastik, Duroplastik, Elastomere, Biopolymere (biologisch abbaubare Kunststoft), Antioxidantien, Oleochemikalien, zum Beispiel Fettsäuren und Glycerine, Alkohole und Metallseifen, Tenside und Schmiermittel, zum Beispiel PE- und PP-Wachse, Schmelzkleber und Harze (zum Beispiel auf Basis von PP, SAN), schmelzeähnliche Polymere, Oligomere und niedrigmolekulare Polymere, auf Kunststoffmaterialien basierende Färbemittel, Chemikalien, pharmazeutische Produkte, keramische Schlicker, Verbindungen durch Polysaccaride (Allignat, Agar, Carrageen, Stärke) und weitere Materialien, welche für eine Stranggranulierung geeignet sind.

Erfindungsgemäß kann die Bandfördervorrichtung also sowohl vorwärts in Produktionsrichtung, d. h. in Zuführförderrichtung zu der Granulierungsvorrichtung hin, und rückwärts, d.h. gegen die Produktionsrichtung, in eine Wegführförderrichtung von der Granuliervorrichtung weg in eine Richtung zu einer Abfallposition erfindungsgemäß umschaltbar sein. Dabei kann der Rückwärtsbetrieb dazu dienen, bei nichtgewünschtem Produktionsbetrieb das Material in eine Abfallposition zu fördern und beim Umschalten in den Vorwärtsbetrieb in den Granulator das Material zur Granulatproduktion zu transportieren, wobei die Vorrichtung so erfindungsgemäß automatisch betreibbar sein kann.

Erfindungsgemäß bevorzugt kann insbesondere beim Anfahren auf einfache Art und Weise ein zuverlässiger Betrieb sichergestellt werden, wenn die Stranggießvorrichtung mit einer zumindest einen Strangauslassöffnung senkrecht oder im Wesentlichen senkrecht über einer ersten Bandrolle der Fördervorrichtung angeordnet ist oder etwas versetzt in Wegführförderrichtung gesehen hinter der ersten Bandrolle angeordnet ist. Die entsprechende Verstellbarkeit gewährleistet, dass in jede der beiden Förderrichtungen jeweils eine optimale Förderung des zumindest einen Stranges erfindungsgemäß besonders zuverlässig sichergestellt sein kann.

Um eine optimale Kühlwirkung und somit eine insbesondere je nach Strangmaterial zuverlässige und gleichmäßige Strangführung zu gewährleisten, durch welche ein Strangabriss beispielsweise durch Einstellung einer bestimmten Strangtemperatur, insbesondere einer Strangtemperatur an der Oberfläche des Strangs, eingestellt werden kann, sind Sprühdüsen für ein Kühlfluid an der Oberseite und/oder Unterseite des Förderbandes vorgesehen. Insbesondere kann das Förderband aus einem Geflecht aus geeignetem Material bestehen, so dass das Kühlfluid auch optimalen in Kontakt zu dem zumindest einem Strang hat.

Um auf einfache und kostengünstige Art und Weise die Ablage der Stränge auf der Band fördervorrichtung erfindungsgemäß weiter besonders mechanisch zu stabilisieren und somit ein Verheddern oder einen Strangabriss besonders zuverlässig vermeiden zu können, ist zumindest in einem Ablagebereich der Bandfördervorrichtung wo der Strang, welcher aus der Stranggießvorrichtung austritt, auf das Förderband abgelegt wird, ein Wannenblech unter dem Förderband vorgesehen, wobei die Sprühdüsen bevorzugt in dem Ablagebereich oder auf den Ablagebereich gerichtet angeordnet sein könne. Somit wird insbesondere im kritischen Bereich der Ablage der Stränge auf der erfindungsgemäßen Bandfördervorrichtung bevorzugt eine besonders gute Kühlmöglichkeit und/oder mechanische Führung der Stränge bzw. des zumindest einen Strangs ermöglicht.

Je nach venvendetem Material kann es besonders vorteilhaft sein, dass eine Absaug- und/oder Abblasvorrichtung vorgesehen ist, zum Absaugen und/oder Abblasen des Kühlfluids von dem Strang, wobei bevorzugt diese Vorrichtungen im Bereich kurz vor der Granuliervorrichtung vorgesehen sein können.

Um beim Anfahrvorgang auf einfache Weise vermeiden zu können, dass überschüssiges Schmelzematerial von der Strangesvorrichtung austreten kann, kann eine Trennvorrichtung vorgesehen sein, zur Durchtrennung des zumindest einen Strangs im Bereich der Strangauslassöffnung.

Um bei einem Berieb in Wechselförderrichtung von der Granuliervorrichtung weg, d.h. in Abfallrichtung, ein Verkleben von Strängen zu vermeiden kann eine Abhebevorrichtung für den zumindest einen Strang vorgesehen sein, welche gegen das Förderband der Bandfördervorrichtung so bewegbar ist, dass ein Abheben der Stränge von dem Förderband beim Betrieb des Förderbands in die Wegfiihrförderrichtung erfolgt.

Bevorzugt kann dann auch beim Betrieb des Förderbands in die Wegführförderrichtung der Strang von einem Strangauffangbehälter auffangbar sein.

Um eine weitestgehende Anpassung an verschiedene zu granulierende Materialstränge vorsehen zu können kann die die Höhe und/oder Neigung der Bandfördervorrichtung verstellbar sein.

Das erfindungsgemäße Verfahren zum Betrieb einer Vorrichtung zur Erzeugung von Granulatkörnern aus Kunststoffmaterial bzw. aus zu granulierendem Material weist die folgenden Schritte auf: Erzeugung von zumindest einem Strang aus dem Kunststoffmaterial bzw. zugranulierendem Material durch Stranggießen; Zuführen des Strangs zu einer Granuliervorrichrung mittels einer Bandfördervorrichtung mit zumindest einem Förderband; Zerteilen des Strangs zu Granulatkörner durch die Granuliervorrichtung; wobei während einer Anlaufphase bzw. zumindest während einer Anlaufphase die Förderrichtung des Förderbands der Bandfördervorrichtung umgekehrt wird von einer Zuführförderrichtung zu der Granuliervorrichtung hin zu einer Wegführförderrichtung von der Granuliervorrichtung weg. Beim stationären Förderbetrieb ist die Förderrichtung dann (wieder) in die Zuführförderrichtung zu der Granuliervorrichtung hin eingestellt.

Um eine besonders einfache, kostengünstige und zuverlässige Anpassbarkeit für den Betrieb einer Vorrichtung mit dem erfindungsgemäßen Verfahren ermöglichen zu können, insbesondere eine Anpassung an verschiedene Materialien um Strangabrisse zu verhindern, kann eine Fördergeschwindigkeit des Förderbandes, eine Extrusionsgeschwindigkeit des zumindest einen Strangs und eine Zuführungsgeschwindigkeit der Granuliervorrichtung einzeln oder zusammen so eingestellt werden, dass eine gezielt einstellbare Verstreckung oder Stauchung des Kunststoffmaterials bzw. des zugranulierenden Materials des Strangs vorgenommen wird.

Erfindungsgemäß bevorzugt kann eine Fördergeschwindigkeit des Förderbands, eine Extrusionsgeschwindigkeit des Strangs und eine Zuführungsgeschwindigkeit der Granuliervorrichtung einzeln oder zusammen so eingestellt werden, dass ein Anfahren oder Anhalten des Verfahrens ohne Auftreten von Verklumpungen durch Anhäufungen des Kunststoffmaterials bzw. des zu granulierende Materials im Bereich der Bandfördervorrichtung und der Granuliervorrichtung erfolgt. Durch entsprechende erfindungsgemäß bevorzugte Verfahrensteuerung kann der Materialzu- und -abfluss in allen Bereichen der erfindungsgemäßen Vorrichtung gemäß dem erfindungsgemäßen Verfahren bevorzugt einstellbar sein.

Generell angemerkt, dass alle Merkmale der Erfindung, welche oben im Zusammenhang mit der erfindungsgemäßen Vorrichtung beschrieben sind auch entsprechend im Zusammenhang mit dem erfindungsgemäßen Verfahren geltend und umgekehrt.

Eine typische Anwendung der Erfindung würde beispielsweise folgendermaßen sein. Aus der Stranggießvorrichtung werden mehrere Stränge, zum Beispiel aus Kunststoffmaterial, mit definierten Abständen parallel auf das Förderband extrudiert. Bei diesem Vorgang ist die Förderrichtung des Bandes in Wegführförderrichtung von der Granuliervorrichtung weg, also gegen die Produktionsrichtung nach rückwärts, eingestellt, wobei die extrudierten Stränge in Richtung der Abfallposition unterhalb des Spritzkopfs der Stranggießvorrichtung gefördert werden. Eine Beaufschlagung mit einem Kühlfluid, bevorzugt beispielsweise Wasser oder auch gasförmiges Kühlfluid, ist so angeordnet, dass die Stränge bereits beim Auftreffen auf das Förderband gekühlt werden und somit ein eventuelles Ankleben der Stränge am Förderband vermieden wird. Wenn die erfindungsgemäße Vorrichtung auf Produktionsbetrieb, also zum Lauf in Vor~värtsrichtung, d.h. in Zuführforderrichtung zu der Granuliervorrichtung hin, umgestellt wird, schneidet die Trennvorrichtung, welche bevorzugt automatisch gesteuert sein kann, im Bereich der Strangauslassöffnung die Kunststoffstränge durch und das Förderband schaltet seine Laufrichtung um auf Vorwärtsbetrieb. Die Stränge werden nun auf dem Obertrum des Förderbandes mitgeführt und mit einem Kühlfluid beaufschlagt. Die Länge des Bandes und die Menge und Temperatur des Kühlfluids richten sich nach den erforderlichen Kühleigenschaften. Bevorzugt soll das zu granulierende Material bei der Granulierung schnittfest sein und nicht mehr zum Verkleben neigen. Bevorzugt im letzten Teilstück des Bandes bzw. im Bereich vor der Granuliervorrichtung wird das anhaftende Kühlfluid an den Strängen und an dem Förderband mit einer Absaug- und/oder Abblasvorrichtung abgesaugt bzw. abgeblasen. Danach verlassen die Stränge das Band und gelangen in einen nachfolgenden Übergangsschacht, wo die Stränge in ein Einzugswerk einer Granuliervorrichtung gefördert und eingezogen werden.

Bei einer Prozessstörung kann über zusätzliche Erkennungseinrichtungen wie beispielsweise Lichtschranken die Störung, beispielsweise einen Strangabriss, erfasst werden und eine automatische Abkratzvorrichtung kann betätigt werden, wobei das Förderband automatisch in den Rückwärtsbetrieb umschaltet, um das Strangmaterial in die Abfallposition zu bewegen. Nach Behebung einer Störung kann dann wieder in den Positionsbetriebszustand umgeschaltet werden.

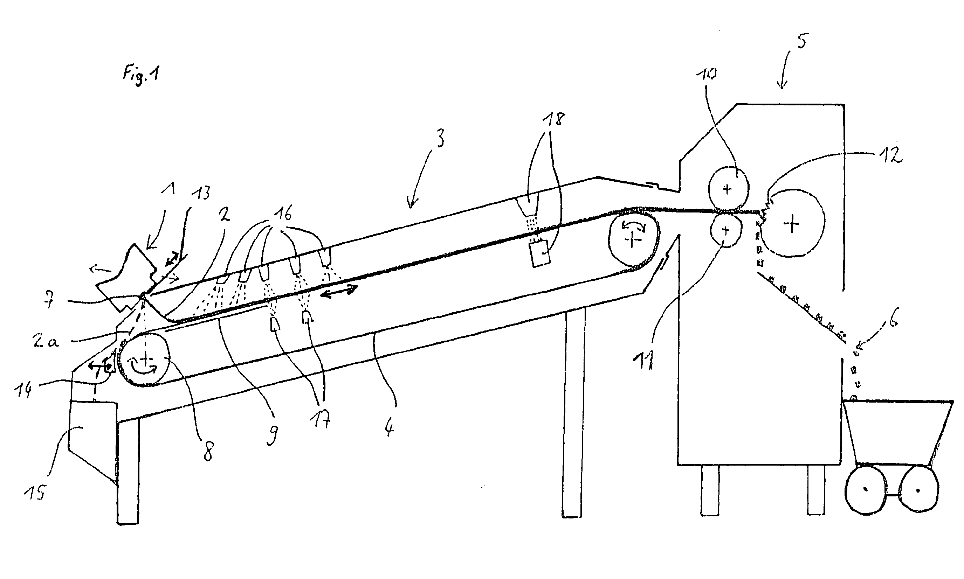

Die Erfindung wird im Folgenden beispielhaft anhand der einzigen Figur 1 beschrieben werden.

Figur 1 zeigt in einer Seitenansicht beispielhaft eine Vorrichtung zur Erzeugung von Granulatkörnern aus einem zu granulierenden Material mit einer Stranggießvorrichtung gemäß einer bevorzugten Ausführungsform der Erfindung.

Aus der Stranggießvorrichtung 1 führt zumindest ein Strang 2 des Kunststoffmaterials her aus. Über eine Bandfördervorrichtung 3 mit zumindest einem Förderband 4 ist der Strang 2 einer Granuliervorrichtung 5 zuführbar, welche den Strang 2 in die Granulatkörner 6 verteilt. Wie durch die entsprechenden Pfeile in Figur 1 angedeutet, weist die Bandfördervorrichtung 3 erfindungsgemäß eine umschaltbare Förderrichtung des Förderbandes 4 auf, mit einer Zuführförderrichtung zu der Granuliervorrichtung 5 hin und mit einer Wegführförderrichtung von der Granu-Hervorrichtung 5 weg. Die Stranggießvorrichtung 1 ist mit einer zumindest einen Strangauslassöffnung 7 senkrecht oder im Wesentlichen senkrecht über einer ersten Bandrolle 8 der Bandfördervorrichtung 3 angeordnet oder etwas versetzt in Wegführförderrichtung gesehen hinter der ersten Bandrolle 8 angeordnet. Die entsprechende Verstellbarkeit ist durch die senkrechten Pfeile nach links bzw. nach rechts in Figur 1 angedeutet.

Es sind Sprühdüsen 16, 17 für ein Kühlfluid an der Oberseite und an der Unterseite 4 des Förderbandes 4 vorgesehen. Ein Wannenblech 9 ist unter dem Förderband 4 zumindest in einem Ablagebereich der Bandfördervorrichtung 3 vorgesehen, wo der Strang 2, welcher aus der Stranggießvorrichtung 1 austritt auf das Förderband 4 abgelegt wird. Die Sprühdüsen 16 sind zumindest zum Teil in dem Ablagebereich angeordnet. Eine Absaug- und Abblasvorrichtung 18 ist vorgesehen zum Ansaugen und Abblasen des Kühlfluids von dem Strang 2. Eine Trennvorrichtung 13 dient zum Durchtrennen des Strangs 2 im Bereich der Strangauslassöffnung 7.

Eine Abhebevorrichtung 14 für den Strang 2a ist vorgesehen, welche so gegen das Förderband 4 bewegbar ist, dass ein Abheben des Strangs 2a von dem Förderband beim Betrieb des Förderbands 4 in die Wegführförderrichtung erfolgen kann. Der Strang 2a kann mit einem Strangauffangbehälter 15 auffangbar sein.

Generell ist zumindest die Bandfördervorrichtung 3 in ihrer Höhe und/oder Neigung verstellbar. Auch die Stranggießvorrichtung 1 kann entsprechend in ihrer Höhe verstellbar sein und auch die Granuliervorrichtung 5 kann entsprechend in ihrer Höhe verstellbar sein. Über Zuführwalzen 10, 11 erfolgt über eine an sich bekannte Schneidvorrichtung 13 eine Granulierung des Strangs 2 in Granulatkörner 6 im Bereich der Granuliervorrichtung 5.

Wie in der in Figur 1 gezeigten Ausführungsform zu sehen, ist die gesamte Anlage im Wesentlichen von Umwelteinflüssen abgekapselt. Die Vorrichtung ist im Wesentlichen vollständig von einem abdichtenden Gehäuse bzw. von abdichtenden Gehäuseteilen, welche zusammenführbar sind, umgeben, insbesondere luftdicht umgeben. Somit kann ein besonders sicherer Betrieb unter weitgehendem Ausfluss von Umwelteinflüssen ermöglicht sein.

Die erfindungsgemäße Vorrichtung bzw. das erfindungsgemäße Verfahren gestattet einen einfachen, kostengünstigen und zuverlässigen Betrieb, insbesondere beim Anfahren, wobei eine weitestgehende Automatisierung bzw. sogar vollständige Automatisierung erfindungsgemäß möglich ist.

## Patentansprüche

1. Vorrichtung zur Erzeugung von Granulatkörnern aus Kunststoffmaterial, mit einer Stranggießvorrichtung (1), aus welcher zumindest ein Strang (2) des Kunststoffmaterials austritt, und einer Bandfördervorrichtung (3) mit zumindest einem Förderband (4), auf welchem der Strang (2) einer Granuliervorrichtung (5) zuführbar ist, welche den Strang (2) in die Granulatkörner (6) zerteilt, **dadurch gekennzeichnet, dass** die Bandfördervorrichtung (3) eine umschaltbare Förderrichtung des Förderbandes (4) ausweist mit einer Zuführförderrichtung zu der Granuliervorrichtung (5) hin und mit einer Wegführförderrichtung von der Granuliervorrichtung (5) weg.

2. Vorrichtung nach Anspruch 1, **dadurch gekennzeichnet, dass** die Stranggießvorrichtung (1) mit einer zumindest einen Strangauslassöffnung (7) senkrecht oder im Wesentlichen senkrecht über einer ersten Bandrolle (8) der Bandfördervorrichtung (3) angeordnet ist oder etwas versetzt in Wegführförderrichtung gesehen hinter der ersten Bandrolle (8) angeordnet ist.

3. Vorrichtung nach Anspruch 1 oder 2, **dadurch gekennzeichnet, dass** Sprühdüsen (16, 17) für ein Kühlfluid an der Oberseite und/oder Unterseite des Förderbandes (4) vorgesehen sind.

4. Vorrichtung nach einem der Ansprüche 1 bis 3, **dadurch gekennzeichnet, dass** zumindest in einem Ablagebereich der Bandfördervorrichtung (3), wo der Strang (2), welcher aus der Stranggießvorrichtung (1) austritt, auf das Förderband (4) abgelegt wird, ein Wannenblech (9) unter dem Förderband (4) vorgesehen ist, wobei die Sprühdüsen (16, 17) in dem Ablagebereich oder auf den Ablagebereich gerichtet angeordnet sind.

5. Vorrichtung nach Anspruch 3 oder 4, **dadurch gekennzeichnet, dass** eine Absaug- und/oder Abblasvorrichtung (18) vorgesehen ist, zum Ansaugen und/oder Abblasen des Kühlfluids von dem Strang (2).

6. Vorrichtung nach einem der Ansprüche 1 bis 5, **dadurch gekennzeichnet, dass** eine Trennvorrichtung (13) vorgesehen ist, zur Durchtrennung des Strangs (2) im Bereich der Strangauslassöffnung (7).

7. Vorrichtung nach einem der Ansprüche 1 bis 6, **dadurch gekennzeichnet, dass** eine Abhebevorrichtung (14) für den Strang (2a) vorgesehen ist, welche gegen das Förderband (4) der Bandfördervorrichtung (3) so bewegbar ist, dass ein Abheben des Strangs (2a) von dem Förderband (4) bei Betrieb des Förderbands (4) in die Wegführförderrichtung erfolgt.

8. Vorrichtung nach einem der Ansprüche 1 bis 7, **dadurch gekennzeichnet, dass** bei Betrieb des Förderbands (4) in die Wegführforderrichtung der Strang (2a) von einem Strangauffangbehälter (15) auffangbar ist.

9. Vorrichtung nach einem der Ansprüche 1 bis 8, **dadurch gekennzeichnet, dass** die Höhe und/oder Neigung der Bandfördervorrichtung (3) verstellbar ist.

10. Verfahren zum Betrieb einer Vorrichtung zur Erzeugung von Granulatkörnern aus Kunststoffmaterial, mit den folgenden Schritten:
- Erzeugung von zumindest einem Strang aus dem Kunststoffmaterial durch Stranggießen;
- Zuführen des Strangs zu einer Granuliervorrichtung mittels einer Bandfördervorrichtung mit zumindest einem Förderband;
- Zerteilen des Strangs zu Granulatkörnern durch die Granuliervorrichtung; **dadurch gekennzeichnet, dass**
während einer Anlaufphase die Förderrichtung des Förderbandes der Bandfördervorrichtung umgekehrt wird von einer Zuführförderrichtung zu der Granuliervorrichtung hin zu einer Wegführförderrichtung von der Granuliervorrichtung weg.

11. Verfahren nach Anspruch 10, wobei eine Fördergeschwindigkeit des Förderbandes, eine Extrusionsgeschwindigkeit des Strangs und eine Zuführungsgeschwindigkeit der Granuliervorrichtung einzeln oder zusammen so eingestellt werden, dass eine gezielt einstellbare Verstreckung oder Stauchung des Kunststoffmaterials des Strangs vorgenommen wird.

12. Verfahren nach Anspruch 10 oder 11, wobei eine Fördergeschwindigkeit des Förderbandes, eine Extrusionsgeschwindigkeit des Strangs und eine Zuführungsgeschwindigkeit der Granuliervorrichtung einzeln oder zusammen so eingestellt werden, dass ein Anfahren oder Anhalten des Verfahrens ohne Auftreten von Verklumpungen durch Anhäufungen des Kunststoffmaterials im Bereich der Bandfördervorrichtung und der Granuliervorrichtung erfolgt.

## Claims

1. A device for producing pellets (6) from a plastic material comprising a continuous casting device (1) from which at least one strand (2) of the plastic material is issued, and a belt conveyor (3) comprising at least one conveying belt (4) configured to feed the strand (2) to a pelletizer (5) that breaks up the strand (2) into pellets (6), **characterized in that** the belt conveyor (3) has a switchable direction of conveyance of the conveying belt (4) with a direction of feed conveyance towards the pelletizer (5) and a direction of discharge conveyance away from the pelletizer (5).

2. The device according to claim 1, wherein the continuous casting device (1) is arranged with at least one strand output opening (7) perpendicular or essentially perpendicular above a first belt roller (8) of the belt conveyor (3) or somewhat offset behind the first belt roller (8) as viewed in the direction of discharge conveyance.

3. The device according to claim 1 or 2, **characterized in that** spraying nozzles (16, 17) are provided for a cooling fluid to be sprayed on an upper side and/or a lower side of the conveyor belt (4).

4. The device according to one of the claims 1 to 3, **characterized in that** at least in a deposition area of the belt conveyor (3) where the strand (2) issued by the continuous casting device (1) is deposited on the conveyor belt (4), a trough plate (9) is provided below the conveyor belt (4), whereby the spraying nozzles (16, 17) are arranged in the deposition area or directed to the deposition area.

5. The device according to claim 3 or 4, **characterized in that** a sucking and/or blowing device (18) is provided for sucking and/or blowing the cooling fluid off the strand (2).

6. The device according to one of the claims 1 to 5, **characterized in that** a breaking device (13) for breaking the strand (2) in the area of a strand outlet opening (7).

7. The device according to one of the claims 1 to 6, **characterized in that** a lift-off device (14) for the strand (2a), wherein the lift-off device is moveable against the conveyor belt (4) of the belt conveyor (3) such that a lifting of the strand (2a) off the conveyor belt (4) is effected in the operation of the conveyor belt in the direction of discharge conveyance.

8. The device according to one of the claims 1 to 7, **characterized in that** the strand (2a) is adapted to be taken up by a strand take-up container (15) during operation of the conveyor belt (4) in the direction of discharge conveyance.

9. The device according to one of the claims 1 to 8, **characterized in that** the height and/or inclination of the belt conveyor (3) is adjustable.

10. A method for operating a device for producing pellets from a plastic material, comprising the following steps:
- producing at least one strand from plastic material by means of continuous casting;
- feeding the strand to a pelletizer by means of a belt conveyor having at least one conveyor belt;
- breaking the strand to pellets by means of the pelletizer, **characterized in that** during a start-up phase, the direction of conveyance of the belt conveyor is switched from a direction of feed conveyance towards the pelletizer into a direction of discharge conveyance away from the pelletizer.

11. The method according to claim 10, wherein a feeding speed of the conveyor belt, an extrusion speed of the strand and a feeding speed of the pelletizer are set up individually or collectively such that a selectively adjustable elongation or compression of the plastic material of the strand is effected.

12. The method according to claim 10 or 11, wherein a feeding speed of the conveyor belt, an extrusion speed of the strand and a feeding speed of the pelletizer are set up individually or collectively such that a start-up or stopping of the operation of the device is effected without clots being build by piling up the plastic material in an area of the belt conveyor and the pelletizer.

## Revendications

1. Dispositif pour la production de corps granulaires en matière plastique avec un dispositif de coulée continue (1) duquel au moins un fil (2) de la substance plastique surgit et un convoyeur à bande (3) avec au moins une bande transporteuse (4) sur laquelle le fil (2) peut être acheminé à un dispositif de granulage (5), lequel divise le fil (2) en corps granulaires (6), **caractérisé en ce que** le convoyeur à bande (3) présente une direction de transport réglable de la bande transporteuse (4) avec une direction d'alimentation orientée vers le dispositif de granulage (5) et une direction d'écartement qui s'éloigne du dispositif de granulage (5).

2. Dispositif selon la revendication 1, **caractérisé en ce que** le dispositif de coulée contenue (1) est disposé, avec une sortie pour le fil (7), verticalement ou essentiellement verticalement au-dessus d'une première bobine à bande (8) du convoyeur à bande (3) ou encore quelque peu décalé derrière la première bobine à bande (8) lorsqu'examiné dans la direction d'écartement.

3. Dispositif selon les revendications 1 ou 2, **caractérisé en ce que** les buses de pulvérisation (16, 17) pour le fluide de refroidissement sont positionnées sur le côté supérieur et/ou le côté inférieur de la bande transporteuse (4).

4. Dispositif selon l'une des revendications 1 à 3, **caractérisé en ce que** dans au moins un espace de stockage du convoyeur à bande (3), où le fil (2) qui surgit du dispositif de coulée continue (1) est posé sur la bande transporteuse (4), une plaque de citerne (9) est disposée sous la bande transporteuse (4), où les buses de pulvérisation (16, 17) sont disposées dans l'espace de stockage ou en direction de celui-ci.

5. Dispositif selon les revendications 3 ou 4, **caractérisé en ce que** un dispositif d'aspiration ou de soufflage (18) est prévu afin d'aspirer ou de souffler le fluide de refroidissement du fil (2).

6. Dispositif selon l'une des revendications 1 à 5, **caractérisé en ce qu'**un séparateur (13) est prévu afin de sectionner le fil (2) dans la zone de la sortie du fil (7).

7. Dispositif selon l'une des revendications 1 à 6, **caractérisé en ce qu'**un des dispositifs de levage (14) pour le fil (2a) est installé et peut être déplacé contre la bande transporteuse (4) du convoyeur à bande (3) de façon à décrocher le fil (2a) de la bande transporteuse (4) lors de l'opération de la bande transporteuse (4) dans la direction d'écartement.

8. Dispositif selon l'une des revendications 1 à 7, **caractérisé en ce que**, lors de l'opération de la bande transporteuse (4) dans la direction d'écartement, le fil (2a) peut être recueilli dans un réservoir collecteur du fil (15).

9. Dispositif selon l'une des revendications 1 à 8, **caractérisé en ce que** la hauteur et l'inclinaison du convoyeur à bande (3) peuvent être ajustées.

10. Procédé d'opération d'un dispositif de production de corps granulaires en matière plastique comprenant les étapes suivantes :
- Production d'au moins un fil composé de la matière plastique par extrudage ;
- Introduction du fil dans un dispositif de granulage au moins d'un convoyeur à bande doté d'au moins une bande transporteuse ;
- Découpage du fil en corps granulaires à l'aide du dispositif de granulage ; **caractérisé en ce que**, lors d'une phase de démarrage, la direction de transport de la bande transporteuse du convoyeur à bande est inversée et passe d'une direction d'alimentation orientée vers le dispositif de granulage à une direction d'écartement qui s'éloigne du dispositif de granulage.

11. Procédé selon la revendication 10, dans lequel une vitesse de transport de la bande de transport, une vitesse d'extrusion du fil et une vitesse d'alimentation du dispositif de granulage sont ajustables individuellement ou conjointement de façon à entreprendre un étirement ajustable souhaité ou le refoulement de la matière plastique du fil.

12. Procédé selon les revendications 10 ou 11, dans lequel une vitesse de transport de la bande de transport, une vitesse d'extrusion du fil et une vitesse d'alimentation du dispositif de granulage sont ajustables individuellement ou conjointement de façon à réaliser un démarrage ou un arrêt du procédé sans causer l'apparition de grumeaux à la suite d'accumulations de la matière plastique dans la zone du convoyeur à bande et du dispositif de granulage.
